# EUROPÄISCHE PATENTSCHRIFT

(11) **EP 0 500 822 B1**
(45) Veröffentlichungstag und Bekanntmachung des Hinweises auf die Patenterteilung: **31.01.1996**
(21) Anmeldenummer: 91910608.8
(22) Anmeldetag: 10.06.1991
(51) Int. Cl.: F16K 17/04, B60T 8/34, F16F 7/08

(54) **DRUCKREGELVENTIL, INSBESONDERE ZUR DRUCKMITTELSTEUERUNG IN SCHLUPFGEREGELTEN, HYDRAULISCHEN BREMSANLAGEN**
PRESSURE-CONTROL VALVE, IN PARTICULAR A VALVE FOR THE CONTROL OF HYDRAULIC FLUID IN SLIP-CONTROLLED HYDRAULIC BRAKE SYSTEMS
REGULATEUR DE PRESSION, NOTAMMENT POUR COMMANDER LE MILIEU SOUS PRESSION DANS DES SYSTEMES HYDRAULIQUES DE FREINAGE A REGULATION DU GLISSEMENT

(30) Priorität: 08.09.1990 DE 4028606
(43) Veröffentlichungstag der Anmeldung: 02.09.1992
(73) Patentinhaber: ITT Automotive Europe GmbH, D-60488 Frankfurt (DE)
(72) Erfinder: BECK, Erhard, D-6290 Weilburg (DE); DAVID, Anton, D-6071 Götzenhain (DE); WEISBROD, Helmut, D-6350 Bad Nauheim (DE); KORNEMANN, Horst, D-6000 Frankfurt am Main 1 (DE)
(86) Internationale Anmeldenummer: EP9101082
(87) Internationale Veröffentlichungsnummer: WO9204566

(56) Entgegenhaltungen:
- EP-A- 0 089 402
- EP-A- 0 286 947
- DE-A- 2 721 673
- DE-B- 1 233 214
- DE-B- 2 654 077
- DE-C- 111 559
- DE-C- 466 788
- DE-U- 8 530 850
- FR-A- 1 386 170
- GB-A- 540 730
- GB-A- 821 628
- US-A- 2 564 815
- US-A- 3 796 228
- US-A- 3 848 632

## Beschreibung

Die Erfindung betrifft ein Druckregelventil, insbesondere zur Druckmittelsteuerung in schlupfgeregelten, hydraulischen Bremsanlagen nach dem Oberbegriff des Anspruchs 1.

Derartige konventionelle, hinreichend bekannte Druckregelventile zur Durchflußsteuerung von Fluiden bei schlupfgeregelten, hydraulischen Bremsanlagen finden vielfältige praktische Verwendung.

Es sind bereits Druckregelventile bekannt, z. B. sei auf die Druckschrift DE 39 30 757 A1 verwiesen, die zur Steuerung des Fluides mit einem in einem Ventilgehäuse geführten, sowie federkraftbeaufschlagten Ventilstößel versehen sind, dessen der Druckfeder abgewandtes Ventilstößelende als Kugelsitzventil ausgebildet ist, um in der Ventilschließstellung leckagefrei den Druckmittelanschluß zu unterbrechen.

Um während der Hubbewegung des Ventilstößels die Geräuschentwicklung und damit die Übertragung von Körperschall zu mindern, sind über den Umfang des Ventilstößels axial erstreckende Ausnehmungen in asymmetrischer Anordnung vorgesehen, die eine vom Volumendurchsatz abhängige radiale Druckkraftresultierende und damit eine Dämpfung der Schwingung bewirken. Zur Herstellung eines entsprechend geformten Ventilstößels bedarf es jedoch zusätzlicher, aufwendiger Bearbeitungsschritte, weshalb der vorbeschriebene Weg zur Lösung des bestehenden Problems als verbesserungswürdig anzusehen ist.

Aus der US 3,796,228 ist bereits ein Druckregelventil hervorgegangen, das mit einer den Öffnungsdruck des Ventils einstellbaren Stößelführung versehen ist. Die Stößelführung ist mittels einer am Ventilgehäuse angebrachten Überwurfmutter in Richtung der Achse des Ventilstößels verstellbar und weist eine über der hülsenförmigen Umfang der Stößelführung übergestülpte Druckfeder auf, die sich mit ihren Federenden an Anschlagflächen der Stößelführung und des Ventilschließgliedes abstützt. Die Druckfeder ist sowohl in ihrem Innen- wie auch Außendurchmesser derart bemessen, daß diese weder den Ventilstößel noch die Innenwandung des Ventilgehäuses berührt. Eine Dämpfung der Ventilstößelbewegung ist damit ausschließlich über den am Umfang des Ventilschließgliedes angebrachten O-Ring möglich, der jedoch zu einer Veränderung des Schaltpunktes des Überdruckventils führt, weshalb es sich empfiehlt das Ventil mit einer Einstellvorrichtung zu versehen, die wie im ausgeführten Beispiel die Vorspannkraft der Druckfeder beeinflußt. Eine gedämpfte Bewegung des Ventilstößel unterliegt zwangsläufig großen Reibkraftschwankungen, die überdies das Schaltverhalten des Überdruckventils beeinträchtigen.

Daher ist es die Aufgabe der Erfindung, ein Druckregelventil der eingangs genannten Gattung dahingehend zu verbessern, daß mit einfachen kostengünstigen Mitteln bei gleichzeitiger Gewährleistung der Funktionssicherheit eine maßgebliche Reduzierung des Geräusches während der Ventilregelphase erzielt wird.

Erfindungsgemäß wird die gestellte Aufgabe durch die den Patentanspruch 1 kennzeichnenden Merkmale gelöst.

Der Grundgedanke der Erfindung bezieht sich folglich auf die Anordnung einer als Reibelement wirksamen Druckfeder, deren radiale Reibflächen während der Bewegung des Ventilstößels wirksam sind, um den mechanischen Schwingungen des Ventilstößels derart zu dämpfen, daß einerseits die vernehmbaren Schaltgeräusche des Ventilstößels unterbleiben und andererseits eventuell entstehende Druckschwingungen verringert werden können.

Eine vorteilhafte konstruktive Ausgestaltung des Erfindungsgegenstandes ist den Merkmalen der Ansprüche 2 bis 4 zu entnehmen, wonach im Hinblick auf die Platzaufteilung und den Materialbedarf die Verwendung einer in Axialrichtung Reibkräfte übertragenden Druckfeder zwischen der Innenstirnfläche des Ventilgehäuses und eines ortsfest am Ventilstößel angebrachten Axialanschlages eingespannt ist, die mit ihren Federwindungen die radiale Innenwandung des Ventilgehäuses reibschlüssig berührt. Somit ist durch Auswahl einer geeigneten Druckfeder eine Beeinflussung der Reibverhältnisse möglich.

Eine erhebliche Reduzierung der Herstellkosten unter Beibehaltung der uneingeschränkten reibschlüssigen Wirksamkeit der Druckfeder, ist durch die Verwendung einer Druckfeder mit ganzzahligen Federwindungen auf verblüffend einfache Weise zu realisieren, da die sich gegenüberliegenden, gleich langen Federenden gleichartige Federauflagepunkte auf einer gemeinsamen desachsierten Wirkungslinie bilden. Dies führt zwangsläufig zu einem seitlichen Ausknicken der Druckfeder und damit zur reibschlüssigen Anlage am Ventilgehäuse.

In der speziellen Ausführungsform des Druckregelventils ist gemäß den Merkmalen des Anspruchs 3 vorgesehen, die reibschlüssige Kontaktierung zwischen der Druckfeder und dem Ventilgehäuse durch eine quer zur Federlängsachse wirksamen Schräge herzustellen, an der das eine Ende der Druckfeder anliegt. Das hierdurch eingesteuerte, von der Federvorspannkraft abhängige Ausknicken der Druckfeder und damit das reibschlüssige Berühren am Ventilgehäuse ermöglichen eine Dämpfung der ventilhubabhängigen Schwingungen.

Gemäß Anspruch 4 kann das Ausknicken der Druckfeder bei Verwendung von seriellen Druckfedern durch die Anordnung einer Schrägen im Endbereich der Druckfeder herbeigeführt werden.

Die Erfindung soll nachstehend anhand mehrerer Ausführungsbeispiele näher erläutert werden.

Es zeigt:
- Figur 1: eine Teildarstellung eines Längsschnittes durch ein Druckregelventil mit ausgeknickter sowie reibschlüssig am Ventilgehäuse und Ventilstößel anliegender Druckfeder,
- Figur 2: eine weitere Ausführungsform des Druckregelventils gemäß Figur 1, mit ebenfalls ausgeknickter, reibschlüssig am Ventilgehäuse und am Ventilstößel anliegender Druckfeder mit ganzzahliger Federwindungszahl.

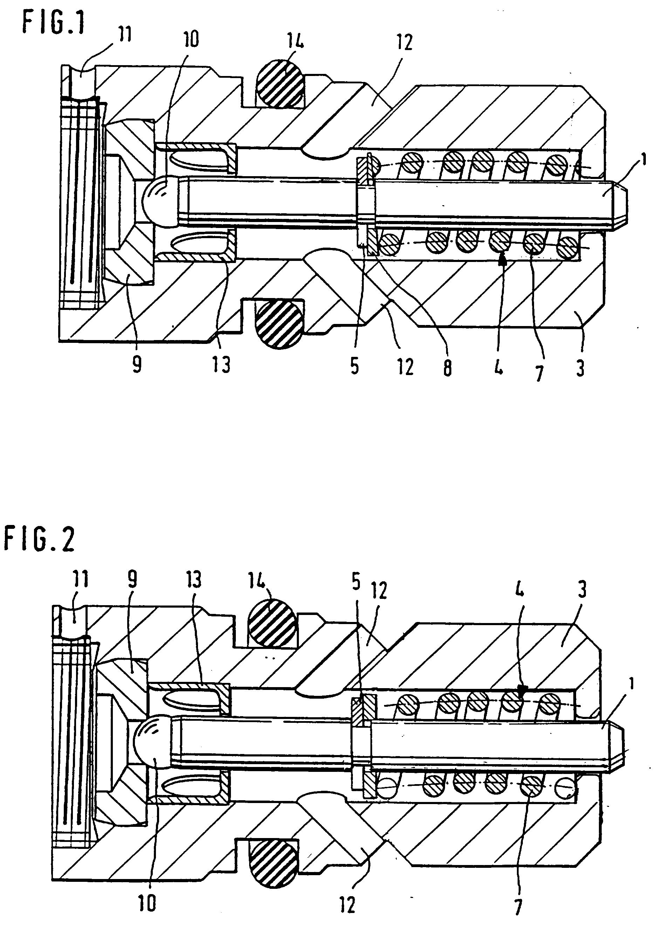

Die Figur 1 zeigt ein Druckregelventil geeignet zur Druckmittelsteuerung in schlupfgeregelten hydraulischen Bremanlagen, mit einem in einem Ventilgehäuse 3 geführten, eine Druckfeder 4 aufnehmenden Ventilstößel 1, wobei ein am Ventilstößel 1 angeformtes und mit einem Ventilsitz 9 korrespondierendes Ventilschließglied 10 zwischen einer von einer Druckmittelquelle kommenden Druckzufuhrleitung 11 und einer Druckrückführleitung 12 eine Verbindung herstellt, wenn der Druck einen bestimmten, voreingestellten Sollwert erreicht. Hierbei ist der Ventilstößel 1 zentralsymmetrisch in dem als Hohlzylinder ausgebildeten Ventilgehäuse 3 angeordnet. Zur Führung des Ventilstößels 1 ist dessen Schaft im Bereich des Ventilsitzes 9 von einem in die Öffnung des Ventilgehäuses 3 eingesetzten Käfig 13 umgeben, während auf der dem Ventilsitz 9 abgewandten Seite der Ventilstößel 1 in einer mittigen, die Innenstirnwand des Ventilgehäuses 3 durchdringenden Bohrung geführt ist. Tangential in die Öffnung des Ventilgehäuses 3 einmündend befinden sich in diametraler Anordnung die Kanäle der Druckrückführleitungen 12, die bei geöffnetem Ventilschließglied 10 eine Verbindung zur Druckzufuhrleitung 11 herstellen. In einer in der Mantelfläche des Ventilgehäuses 3 eingelassenen Ringnut befindet sich ein Dichtring 14, der gegenüber einem nicht näher dargestellten Ventilblock die gehäuseseitigen Kontaktflächen druckmitteldicht verschließt.

Zur Dämpfung der Geräuschentwicklung ist das als Druckfeder 4 ausgebildete Reibelement zwischen der Innenstirnwand des Ventilgehäuses 3 und einem am Ventilstößel 1 angebrachten Axialanschlag 5 eingespannt, wobei die Druckfeder 4 mit einzelnen Federwindungen 7 reibschlüssig am Ventilstößel 1 anliegt. Am Axialanschlag 5 des Ventilstößels 1 ist eine Schräge 8 angebracht, die für ein Ausbauchen der Druckfeder 4 sorgt, indem die als Schraubenfeder zur Anwendung kommende Druckfeder 4 durch das seitliche Ausknicken mit vereinzelten Federwindungen 7 an der Innenwandung des Ventilgehäuses 3 reibschlüssig zur Anlage gelangt.

Das Ausführungsbeispiel gemäß Figur 2 zeigt eine verblüffend einfach zu realisierende, seitlich gerichtete elastische Deformation der Druckfeder 4, indem die zwischen dem Axialanschlag 5 des Ventilstößels 1 und der Innenstirnwand des Ventilgehäuses 3 eingespannte Schraubenfeder mit ganzer Windungszahl ausgeführt ist, womit bei gleichartiger Abstützung der gegenüberliegenden Federenden zwangsläufig ein Ausknicken der Druckfeder 4 zustandekommt. Dies führt in Abhängigkeit von der Federauslegung im Extremfall zusätzlich zu einer reibschlüssigen partiellen Kontaktierung einzelner Windungsinnenflächen am Schaft des Ventilstößels 1.

### Bezugszeichenliste

- 1: Ventilstößel

- 3: Ventilgehäuse
- 4: Druckfeder
- 5: Axialanschlag
- 6: Axialanschlag
- 7: Federwindung
- 8: Schräge
- 9: Ventilsitz
- 10: Ventilschließglied
- 11: Druckzufuhrleitung
- 12: Druckrückführleitung
- 13: Käfig
- 14: Dichtring

## Patentansprüche

1. Druckregelventil, insbesondere zur Druckmittelsteuerung in schlupfgeregelten, hydraulischen Bremsanlagen, mit einem in einem Ventilgehäuse (3) geführten, eine Druckfeder (4) aufnehmenden Ventilstößel (1), wobei ein am Ventilstößel (1) angeformtes und mit einem Ventilsitz (9) korrespondierendes Ventilschließglied (10) zwischen einer von einer Druckmittelquelle kommenden Druckzufuhrleitung (11) und einer Druckrückführleitung (12) eine Verbindung herstellt, wenn der Druck einen bestimmten voreingestellten Sollwert erreicht, dadurch **gekennzeichnet**, daß mindestens eine mit dem Ventilstößel (1) in Eingriff stehende Druckfeder (4) als Reibelement an radialen Reibflächen des Ventilgehäuses (3) und des Ventilstößels (1) anlegbar ist, die mit ihren Federwindungen (7) die radiale Innenwandung des Ventilgehäuses (3) reibschlüssig kontaktiert, daß die reibschlüssige Kontaktierung zwischen der Druckfeder (4) und dem Ventilgehäuse (3) aus einer ganzzahligen Menge der Federwindungen (7) gebildet ist, wobei die Druckfeder (4) seitlich gerichtet defomiert und ausgeknickt ist, und daß infolge der seitlich gerichteten Deformation und Ausknickung der Druckfeder (4) einzelne Federwindungen (7) mit ihren Windungsinnenflächen den Schaft des Ventilstößels (1) reibschlüssig kontaktieren.

2. Druckregelventil nach Anspruch 1, dadurch **gekennzeichnet,** daß die Druckfeder (4) zwischen der Innenstirnfläche des Ventilgehäuses (3) und einem ortsfest am Ventilstößel (1) angebrachten Axialanschlag (5) eingespannt ist.

3. Druckregelventil nach Anspruch 2, dadurch **gekennzeichnet,** daß die reibschlüssige Kontaktierung zwischen der Druckfeder (4) und dem Ventilgehäuse (3) mittels einer quer zur Federlängsachse wirksamen Schräge (8) erfolgt, an der ein Ende der Druckfeder (4) gelagert ist.

4. Druckregelventil nach Anspruch 3, dadurch **gekennzeichnet**, daß die Schräge (8) aus einer separat an dem Axialanschlag (5,6) positionierten Scheibe mit unterschiedlicher Dicke gebildet ist.

## Claims

1. A pressure control valve, in particular for pressure fluid control in slip-controlled hydraulic brake systems, including a valve tappet (1) which is guided in a valve housing (3) and accommodates a compression spring (4), wherein a valve closure member (10) shaped on the valve tappet (1) and communicating with a valve seat (9) establishes a connection between a pressure supply conduit (11), emanating from a pressure fluid source, and a pressure return line (12) when the pressure has reached a specific preset nominal value, **characterized** in that at least one compression spring (4), being in engagement with the valve tappet (1), in its capacity as a friction element, is movable into abutment on radial friction surfaces of the valve housing (3) and the valve tappet (1), which compression spring with its spring coils (7) is in frictional contact with the radial inside wall of the valve housing (3), in that the frictional contacting between the compression spring (4) and the valve housing (3) is formed by an integral number of spring coils (7), the compression spring (4) being deformed and buckled in a lateral direction, and in that due to the laterally directed deformation and buckling of the compression spring (4), individual spring coils (7), with their inner surfaces, are in frictional contact with the stem of the valve tappet (1).

2. A pressure control valve as claimed in claim 1, **characterized** in that the compression spring (4) is compressed between the inner end surface of valve housing (3) and an axial stop (5) that is stationary on valve tappet (1).

3. A pressure control valve as claimed in claim 2, **characterized** in that the frictional contacting between the compression spring (4) and the valve housing (3) is effected by means of a slope (8) which is effective transversely relative to the spring's longitudinal axis and on which an end of the compression spring (4) is supported.

4. A pressure control valve as claimed in claim 3, **characterized** in that the slope (8) is formed of a disc of varying thickness which is positioned separately on the axial stop (5, 6).

## Revendications

1. Régulateur de pression, notamment pour commander le fluide sous pression dans des systèmes hydrauliques de freinage à régulation du glissement, comportant un poussoir de soupape (1) guidé dans un boîtier de soupape (3) et recevant un ressort de compression (4), un obturateur de soupape (10), formé sur le poussoir de soupape (1) et correspondant avec un siège de soupape (9), réalisant une liaison entre une conduite d'alimentation en pression (11) provenant d'une source de fluide sous pression et une conduite de retour de pression (12) lorsque la pression atteint une valeur donnée de consigne préréglée, **caractérisé** en ce qu'au moins un ressort de compression (4) se trouvant en engagement avec le poussoir de soupape (1) peut être appliqué, en tant qu'élément de friction, contre des faces de friction radiales du boîtier de soupape (3) et du poussoir de soupape (1), ressort dont les spires (7) entrent en contact de friction avec la paroi intérieure radiale du boîtier de soupape (3), en ce que la mise en contact de friction entre le ressort de compression (4) et le boîtier de soupape (3) est assurée par un nombre entier de spires (7), le ressort de compression (4) étant déformé en direction latérale et flambé, et en ce que, par suite de la déformation en direction latérale et du flambage du ressort de compression (4), certaines des spires (7) entrent en contact de friction, par leurs faces intérieures, avec la tige du poussoir de soupape (1).

2. Régulateur de pression selon la revendication 1, **caractérisé** en ce que le ressort de compression (4) est serré entre la face frontale intérieure du boîtier de soupape (3) et une butée axiale (5) montée fixe sur le poussoir de soupape (1).

3. Régulateur de pression selon la revendication 2, **caractérisé** en ce que la mise en contact de friction entre le ressort de compression (4) et le boîtier de soupape (3) s'effectue au moyen d'un chanfrein (8) actif transversalement à l'axe longitudinal du ressort, chanfrein à une extrémité duquel est monté le ressort de compression (4).

4. Régulateur de pression selon la revendication 3, **caractérisé** en ce que le chanfrein (8) est formé par une rondelle séparément positionnée sur la butée axiale (5, 6) et d'épaisseur différente.
